# FASCICULE DE BREVET EUROPEEN

(11) **EP 3 005 377 B1**
(45) Date de publication et mention de la délivrance du brevet: **17.04.2024**
(21) Numéro de dépôt: 14733244.9
(22) Date de dépôt: 03.06.2014
(51) Int. Cl.: H01B 3/40, H01B 3/44

(54) **DISPOSITIF ÉLECTRIQUE À MOYENNE OU HAUTE TENSION**
ELEKTRISCHE MITTELSPANNUNGS- ODER HOCHSPANNUNGSVORRICHTUNG
MEDIUM-VOLTAGE OR HIGH-VOLTAGE ELECTRICAL DEVICE

(30) Priorité: 04.06.2013 FR 1355102; 01.10.2013 FR 1359471; 03.12.2013 FR 1362019
(43) Date de publication de la demande: 13.04.2016
(73) Titulaire: Nexans, 92400 Courbevoie (FR)
(72) Inventeur: BRICENO GARCIA, Ruben, 69100 Villeurbanne (FR); GOUTILLE, Yannick, 69100 Villeurbanne (FR); KEROMNES, Laurent, 69630 Chaponost (FR); CARTERON, Lucile, 69007 Lyon (FR); MARTY, Jean-Michel, 69110 Sainte Foy Les Lyon (FR); FENOUILLOT-RIMLINGER, Françoise, 38080 L'Isle D'Abeau (FR); CHAUMONT, Philippe, 69120 Vaulx-en-Velin (FR); CASSAGNAU, Philippe, 69390 Millery (FR)
(74) Mandataire: Ipsilon
(86) Numéro de dépôt international: PCT/FR2014/051316
(87) Numéro de publication internationale: WO 2014/195628

(56) Documents cités:
- EP-A1- 2 444 455
- WO-A1-2012/052077
- WO-A1-2013/091575
- WO-A2-2013/091875
- KIM K S ET AL: "Cross-linked polyolefin composition having excellent electrical insulation property and thermal stability", WPI / THOMSON,, vol. 2005, no. 48, 23 février 2005 (2005-02-23), XP002686184,

## Description

La présente invention se rapporte à un dispositif électrique du type câble électrique ou accessoire pour câble électrique. Elle s'applique typiquement, mais non exclusivement, aux domaines des câbles d'énergie à basse tension (notamment inférieure à 6kV), à moyenne tension (notamment de 6 à 45-60 kV) ou à haute tension (notamment supérieur à 60 kV, et pouvant aller jusqu'à 800 kV), qu'ils soient à courant continu ou alternatif.

Les câbles d'énergie comprennent typiquement un conducteur électrique central et au moins une couche électriquement isolante réticulée par des techniques bien connues de l'homme du métier, notamment par voie peroxyde.

La voie peroxyde tend de plus en plus à être évitée par rapport aux produits de décomposition du peroxyde, présentant des inconvénients lors de la fabrication du câble, voire même une fois le câble en configuration opérationnelle. En effet, lors de la réticulation, les peroxydes se décomposent et forment des sous-produits de réticulation tels que notamment du méthane, de l'acétophénone, de l'alcool cumylique, de l'acétone, du tertiobutanol, de l'alpha-méthyle styrène et/ou de l'eau. La formation d'eau à partir d'alcool cumylique est relativement lente et peut se produire après plusieurs mois, voire quelques années une fois que le câble est en configuration opérationnelle. Le risque de claquage des couches réticulées est ainsi augmenté de façon significative. En outre, si le méthane formé au cours de l'étape de réticulation n'est pas évacué des couches réticulées, des risques liés à l'explosivité du méthane et sa capacité à s'enflammer ne doivent pas être ignorés. Ce gaz peut également occasionner des dégâts une fois le câble mis en service. Même si des solutions existent pour limiter la présence de méthane au sein du câble, telles que par exemple traiter le câble thermiquement afin d'accélérer la diffusion de méthane en dehors du câble, elles deviennent longues et coûteuses lorsque l'épaisseur des couches réticulées est importante.

A titre d'exemple de procédé de réticulation n'utilisant pas la voie peroxyde, on peut citer le document US-4 826 726 qui décrit un câble copolymère éthylénique comprenant une fonction oxirane, et un composé polymérique en tant qu'agent de réticulation, du type copolymère d'éthylène et d'anhydride d'acide dicarboxylique insaturé. Le document WO2012052077A1 divulgue un câble comprenant une couche formée d'une composition contenant des groupes époxy.

Toutefois, une fois ladite composition réticulée, la couche obtenue ne présente pas des propriétés de résistance à la traction et d'allongement à la rupture optimales, notamment au cours de la vie du câble électrique (cf. vieillissement).

Le but de la présente invention est de pallier les inconvénients des techniques de l'art antérieur en proposant un dispositif électrique du type câble électrique ou accessoire pour câble électrique, comprenant une couche réticulée dont la fabrication limite de façon significative la présence de sous-produits de réticulation, comme par exemple le méthane et/ou l'eau, tout en garantissant des propriétés mécaniques (résistance à la traction et allongement à la rupture) optimales au cours de la vie du dispositif électrique.

La présente invention a pour objet un dispositif électrique selon la revendication 1.

Grâce à l'invention, la couche réticulée permet d'éviter l'utilisation de peroxyde organique, tout en garantissant d'une part un haut niveau de réticulation, et d'autre part de très bonnes propriétés mécaniques du type résistance à la traction et allongement à la rupture selon la norme NF EN 60811-1-1, au cours de la vie du dispositif électrique.

En outre, la couche réticulée de l'invention présente l'avantage d'être économique, facile à mettre en oeuvre, notamment par extrusion, et facile à fabriquer, puisqu'elle ne nécessite pas de recourir à des procédés contraignants de dégazage.

### Le composé C

Le groupement réactif du composé C est notamment apte à interagir physiquement avec la fonction hydroxyle qui est formée lors de la réticulation du polymère A avec le composé B. En d'autres termes, le groupement réactif du composé C n'est pas apte à interagir chimiquement avec la fonction hydroxyle formée à partir de la fonction époxy du polymère A lors de la réticulation de la composition polymère. Il ne modifie ainsi pas la structure chimique de ladite fonction hydroxyle, notamment il n'est pas apte à former de liaison chimique du type covalente avec ladite fonction hydroxyle.

Plus particulièrement, ledit groupement réactif est apte à former des liaisons de Van der Waals et/ou des liaisons hydrogènes, avec les groupes hydroxyle provenant des fonctions époxy du polymère A une fois ouvertes.

Le composé C permet de limiter significativement, voire d'empêcher, les fonctions époxy susceptibles de ne pas avoir réagi pendant la réticulation de la composition polymère, de réagir chimiquement par éthérification avec les groupes hydroxyle provenant des fonctions époxy une fois ouvertes.

Le composé C va donc encombrer stériquement les groupes hydroxyles provenant des fonctions époxy déjà ouvertes, et ainsi limiter significativement, voire empêcher, l'éthérification des fonctions époxy susceptibles de ne pas avoir réagi lors de la réticulation.

Le composé C peut être différent du polymère A et de l'agent de réticulation B. Il est de préférence un composé organique.

Le composé C peut être un composé polymérique ou non polymérique.

On entend par « composé non polymérique » un composé différent d'un polymère. En d'autres termes, ce composé n'est notamment pas issu de l'enchaînement covalent d'un grand nombre de motifs monomères identiques ou différents, et plus particulièrement n'est pas issu de l'enchaînement covalent d'au moins deux motifs monomères identiques ou différents.

De façon particulièrement préférée, le composé C est un antioxydant.

Le groupement réactif du composé C est un atome d'hydrogène, sous la forme d'un groupement hydroxyle (OH) et/ou d'un groupement amine (NH), l'amine pouvant être du type primaire ou secondaire.

Le groupement aromatique du composé C peut être un groupement benzénique ou un de ses dérivés.

Selon une première variante, le groupement aromatique ensemble avec le groupement réactif peuvent former un groupement phénolique.

De préférence, le groupement phénolique est di-substitué en position ortho.

A titre d'exemple, on peut citer les composés suivants, comprenant au moins un groupement phénolique di-substitué en position ortho :
- phénol, 2-methyl-4,6-bis[(octylthio)methyl] (Irgastab KV10 ; CAS No. 110553-27-0) ;
- benzenepropanoic acid, 3,5-bis(1,1-dimethylethyl)-4-hydroxy-, 1,1'-(2,2-bis((3-(3,5-bis(1,1-dimethylethyl)-4-hydroxyphenyl)-1-oxopropoxy) methyl)-1,3-propanediyl) ester (Irganox 1010 ; CAS No. 6683-19-8) ;
- 3,5-Bis(1,1-dimethylethyl)-4-hydroxybenzenepropanoic acid octadecyl ester (Irganox 1076 ; CAS No. 2082-79-3) ;
- 1,3,5-triméthyl-2,4,6-tris(3',5'-di-tert-butyl-4'-hydroxybenzyl)benzene (Irganox 1330 ; CAS No. 1709-70-2) ;
- Thiodiethylene bis(3-(3,5-di-tert-butyl-4-hydroxyphenyl)propionate) (Irganox 1035 ; CAS No. 41484-35-9).

De façon particulièrement préférée, le groupement phénolique est un groupement di-tert-butyl-4-hydroxyphenyl. A titre d'exemple, on peut citer Irganox 1010, Irganox 1076, Irganox 1330 ou Irganox 1035.

Dans cette première variante, le composé C peut donc être l'Irganox 1035, ou bien un composé qui n'est pas l'Irganox 1035.

Selon une deuxième variante, le groupement aromatique ensemble avec le groupement réactif forment un groupement aminobenzénique dont l'amine est du type primaire ou secondaire. A titre d'exemple, on peut citer le 1,2-dihydro-2,2,4-trimethylquinoline ou le poly(1,2-dihydro-2,2,4-trimethylquinoline) (CAS No. 26780-96-1).

Le composé C de l'invention peut comprendre en outre un groupement thioéther. A titre d'exemple, on peut citer Irgastab KV10 ou Irganox 1035.

La composition polymère conforme à l'invention peut comprendre au plus 10,0 parties en poids de composé C pour 100 parties en poids de polymère(s) dans la composition, de préférence au plus 5,0 parties en poids de composé C pour 100 parties en poids de polymère(s) dans la composition, de préférence au plus 2,0 parties en poids de composé C pour 100 parties en poids de polymère(s) dans la composition, et de façon particulièrement préférée au plus 1,0 partie en poids de composé C pour 100 parties en poids de polymère(s) dans la composition.

La composition polymère conforme à l'invention peut comprendre au moins 0,01 partie en poids de composé C pour 100 parties en poids de polymère(s) dans la composition, et de préférence au moins 0,1 partie en poids de composé C pour 100 parties en poids de polymère(s) dans la composition.

Dans la présente invention, lorsque l'on parle de « 100 parties en poids de polymère(s) », on entend préférentiellement le ou les polymères différents de l'agent de réticulation B et du composé C dans la composition polymère (lorsque l'agent de réticulation B et/ou le composé C sont sous forme de polymère).

### Le polymère A

La fonction époxy (i.e. fonction époxyde) du polymère A est plus particulièrement une fonction oxirane (i.e. un groupement d'oxyde d'éthylène).

De préférence, la fonction époxy peut être apportée par un composé comprenant ladite fonction époxy, ce composé pouvant être choisi parmi les esters de glycidyle. Ainsi, le polymère de l'invention peut comprendre des groupements d'ester de glycidyle.

Le polymère A de l'invention peut comprendre au plus 10% en poids de fonction époxy, et de préférence au plus 5% en poids de fonction époxy.

Le polymère A de l'invention peut comprendre au moins 0,1 % en poids de fonction époxy, et de préférence au moins 1% en poids de fonction époxy.

Selon une première variante, la fonction époxy du polymère A peut être greffée sur ledit polymère. Le polymère comprenant au moins une fonction époxy de l'invention est, selon cette première variante, un polymère greffé époxy. En d'autres termes, le polymère selon l'invention peut être un polymère comprenant au moins une fonction époxy greffée sur la chaine macromoléculaire (i.e. chaîne principale ou « backbone ») dudit polymère. Les extrémités de la chaîne macromoléculaire du polymère peuvent être quant à elles greffées ou non avec la fonction époxy.

Selon une deuxième variante, le polymère comprenant au moins une fonction époxy de l'invention peut être un copolymère obtenu à partir d'au moins deux monomères, l'un des deux monomères comprenant ladite fonction époxy. Ledit monomère comprenant ladite fonction époxy peut être choisi parmi les composés suivants : monoglycidylester d'acide butène carboxylique, méthacrylate de glycidyle, acrylate de glycidyle, acrylate de méthylglycidyle, méthacrylate de méthylglycidyle, glycidester d'acide itaconique, méthacrylate de 7,8-epoxy-1-octyl, méthylglycidester d'acide itaconique, éther vinylique 7,8-epoxy-1-octyl, éther glycidylique de vinyle, éther allylglycidique et éther glycidylique de 2-methyl-2-propenyl.

A titre d'exemple, on peut citer comme polymère comprenant au moins une fonction époxy le copolymère d'éthylène et de méthacrylate de glycidyle.

Le polymère A de l'invention est plus particulièrement un polymère organique, permettant notamment de mettre en forme par extrusion la composition polymère.

Le polymère A peut comprendre au moins une polyoléfine. Le terme « polyoléfine » en tant que tel signifie de façon générale polymère d'oléfine du type homopolymère ou copolymère d'oléfine. De préférence, ledit polymère d'oléfine est un polymère d'oléfine non cyclique.

Dans la présente invention, on préférera utiliser un polymère d'éthylène (homo- ou copolymère d'éthylène) ou un polymère de propylène (homo- ou copolymère de propylène).

La première variante de l'invention pourra être utilisée avec un homopolymère d'oléfine greffé époxy ou un copolymère d'oléfine greffé époxy.

La seconde variante de l'invention pourra être utilisée avec un copolymère obtenu à partir d'un monomère d'oléfine et d'un monomère comprenant au moins une fonction époxy, tel que décrit ci-avant.

La composition polymère de l'invention peut comprendre plus de 50,0 parties en poids de polymère(s) comprenant au moins une fonction époxy (i.e. polymère A) pour 100 parties en poids de polymère(s) (i.e. matrice polymère) dans la composition polymère ; de préférence au moins 70 parties en poids de polymère(s) A pour 100 parties en poids de polymère(s) dans ladite composition polymère ; et de façon particulièrement préférée au moins 90 parties en poids de polymère(s) A pour 100 parties en poids de polymère(s) dans ladite composition polymère.

Dans la présente invention, lorsque l'on parle de « 100 parties en poids de polymère(s) », on entend préférentiellement le ou les polymères différents de l'agent de réticulation B et du composé C dans la composition polymère (lorsque l'agent de réticulation B et/ou le composé C sont sous forme de polymère).

De façon particulièrement avantageuse, le ou les polymères constitutifs de la composition polymère sont uniquement un ou des polymère(s) à base d'oléfine (i.e. homopolymère et/ou copolymère d'oléfine).

Dans un mode de réalisation particulier, le polymère de l'invention peut comprendre en outre au moins une fonction acrylate. Cette fonction acrylate permet avantageusement d'assouplir et de rendre plus flexible le polymère de l'invention.

Selon une première variante, la fonction acrylate peut être greffée sur le polymère de l'invention. Le polymère de l'invention est, selon cette première variante, un polymère greffé acrylate. En d'autres termes, le polymère selon l'invention peut être un polymère comprenant au moins une fonction acrylate greffée sur la chaine macromoléculaire (i.e. chaîne principale ou *« backbone* ») dudit polymère. Les extrémités de la chaîne macromoléculaire du polymère peuvent être quant à elles greffées ou non avec la fonction acrylate.

Selon une deuxième variante, le polymère de l'invention peut être un copolymère obtenu à partir d'au moins deux monomères, l'un des deux monomères comprenant ladite fonction acrylate. On peut citer à titre d'exemple le terpolymère d'éthylène, d'acrylate de méthyle et de méthacrylate de glycidyle.

### L'agent de réticulation B

L'agent de réticulation B de l'invention peut être un composé polymérique ou un composé non polymérique. De préférence, l'agent de réticulation est différent du polymère A.

On préférera utiliser un composé non polymérique en tant que composé B puisque ce type d'agent de réticulation permet avantageusement d'améliorer la résistance aux claquages électriques de la couche réticulée, notamment selon la norme IEC 62539, à 20°C, basée sur la distribution de Weibull.

Lorsque l'agent de réticulation de l'invention est du type « non polymérique », il n'est pas issu de l'enchaînement covalent d'un grand nombre de motifs monomères identiques ou différents, et de préférence il n'est pas issu de l'enchaînement covalent d'au moins deux motifs monomères identiques ou différents.

La fonction réactive de l'agent de réticulation est apte à réagir avec la fonction époxy dudit polymère pour permettre la réticulation dudit polymère. Elle va réagir directement sur la fonction époxy après ouverture de l'époxy lors d'une élévation de température.

La fonction réactive de l'agent de réticulation est choisie parmi une fonction anhydride, une fonction carboxyle et une fonction amine.

Lorsque L'agent de réticulation comprend au moins une fonction amine, la fonction amine est une amine primaire ou secondaire.

Dans un mode de réalisation particulier, l'agent de réticulation peut comprendre au moins deux fonctions réactives. Ces deux fonctions réactives peuvent être identiques ou différentes, et choisies indifféremment parmi une fonction anhydride, une fonction carboxyle et une fonction amine.

L'agent de réticulation peut comprendre de préférence une fonction amine et une fonction carboxyle.

L'agent de réticulation peut comprendre de préférence deux fonctions amine.

A titre d'exemple d'agent de réticulation non polymérique, on peut citer les acides aminés, les diamines, les anhydrides, les acides de Lewis, les acides de Bronsted.

L'agent de réticulation non polymérique préféré de l'invention est choisi parmi :
- un composé non polymérique comprenant au moins une fonction amine et au moins une fonction carboxyle, i.e. un acide aminé,
- un composé non polymérique comprenant au moins une fonction anhydride, associé de préférence à un catalyseur de réticulation, et
- un de leurs mélanges.

L'acide aminé comprend typiquement deux fonctions : une fonction carboxyle -COOH, et une fonction amine qui est de préférence du type amine primaire -NH₂. La chaîne carbonée séparant la fonction carboxyle de la fonction amine peut comprendre de 1 à 50 atomes de carbone, et de préférence de 1 à 20 atomes de carbone. Classiquement, les fonctions carboxyle et amine peuvent être positionnées aux extrémités de la chaîne carbonée principale dudit acide aminé, la chaîne carbonée principale étant de préférence une chaîne non ramifiée. L'acide aminé peut être également un acide alpha-aminé se définissant par le fait que la fonction amine est liée à l'atome de carbone adjacent à la fonction carboxyle (le carbone alpha).

A titre d'exemple préféré, on peut citer l'acide amino 11 undécanoïque.

Lorsque l'agent de réticulation est un composé non polymérique comprenant une fonction anhydride, la composition peut comprendre en outre un catalyseur de réticulation, ou en d'autres termes ledit composé non polymérique comprenant une fonction anhydride est associé, dans la composition polymère, à un catalyseur de réticulation.

Le composé non polymérique comprenant une fonction anhydride est plus particulièrement un composé organique. En d'autres termes, le composé non polymérique comprenant une fonction anhydride est constitué uniquement de carbone, et d'hydrogène, et optionnellement d'oxygène.

Plus particulièrement, ledit composé non polymérique comprenant une fonction anhydride, comprend en outre une chaine aliphatique comprenant au moins 5 atomes de carbone, cette chaîne pouvant être saturée ou insaturée.

A titre d'exemple, on peut citer l'anhydride dodecenyle succinique.

A titre d'exemple d'agent de réticulation polymérique, on peut citer les copolymères d'oléfine et d'acide monocarboxylique insaturé, les copolymères d'oléfine et d'acide dicarboxylique insaturé, les copolymères d'oléfine et d'anhydride d'acide dicarboxylique insaturé. L'oléfine citée pour ces copolymères est de préférence de l'éthylène.

La composition polymère conforme à l'invention peut comprendre une quantité d'agent de réticulation B en quantité nécessaire et suffisante pour obtenir la couche réticulée.

A titre d'exemple, la composition polymère conforme à l'invention peut comprendre au plus 15,0 parties en poids d'agent de réticulation B pour 100 parties en poids de polymère(s) dans la composition, de préférence au plus 10,0 parties en poids d'agent de réticulation B pour 100 parties en poids de polymère(s) dans la composition, et de préférence au plus 5,0 parties en poids d'agent de réticulation B pour 100 parties en poids de polymère(s) dans la composition.

La composition polymère conforme à l'invention peut comprendre au moins 0,1 parties en poids d'agent de réticulation B pour 100 parties en poids de polymère(s) dans la composition, et de préférence au moins 0,5 parties en poids d'agent de réticulation B pour 100 parties en poids de polymère(s) dans la composition.

Dans la présente invention, lorsque l'on parle de « 100 parties en poids de polymère(s) », on entend préférentiellement le ou les polymères différents de l'agent de réticulation B et du composé C dans la composition polymère (lorsque l'agent de réticulation B et/ou le composé C sont sous forme de polymère).

### Composition polymère chargée

La composition polymère de l'invention peut en outre comprendre une charge.

La charge de l'invention peut être une charge minérale ou organique. Elle peut être choisie parmi une charge ignifugeante et une charge inerte (ou charge non combustible).

A titre d'exemple, la charge ignifugeante peut être une charge hydratée, choisie notamment parmi les hydroxydes métalliques tels que par exemple le dihydroxyde de magnésium (MDH) ou le trihydroxyde d'aluminium (ATH). Ces charges ignifugeantes agissent principalement par voie physique en se décomposant de manière endothermique (e.g. libération d'eau), ce qui a pour conséquence d'abaisser la température de la couche réticulée et de limiter la propagation des flammes le long du dispositif électrique. On parle notamment de propriétés de retard à la flamme, bien connues sous l'anglicisme « *flame retardant* ».

La charge inerte peut être, quant à elle, de la craie, du talc, de l'argile (e.g. le kaolin), du noir de carbone, ou des nanotubes de carbone.

Selon une première variante, le noir de carbone, en tant que charge électriquement conductrice, pourra être préféré pour obtenir une couche réticulée semi-conductrice, et pourra être introduit dans la composition polymère en une quantité suffisante pour rendre la composition semi-conductrice.

Selon une seconde variante, le noir de carbone pourra être utilisé en faible quantité pour améliorer les propriétés diélectriques d'une couche électriquement isolante.

La composition polymère peut comprendre au moins 5 parties en poids de charge pour 100 parties en poids de polymère dans la composition, de préférence au moins 10 parties en poids de charge pour 100 parties en poids de polymère dans la composition, et encore plus préférentiellement au moins 20 parties en poids de charge pour 100 parties en poids de polymère dans la composition.

L'ajout d'une charge telle que décrite dans l'invention peut entraîner une élévation de température lors de la mise en oeuvre de la composition polymère, et de ce fait induire une réticulation prématurée de la composition polymère. Ainsi, pour éviter toute réticulation prématurée de la composition polymère, il est préférable que l'ajout de la charge soit réalisé de façon à ce qu'il n'y ait pas de réticulation prématurée de la composition polymère lors de sa mise en oeuvre. Plus particulièrement, l'agent de réticulation peut être avantageusement ajouté à la composition polymère dans une étape distincte et postérieure à celle de l'ajout de la charge.

Selon une autre caractéristique de l'invention, et afin de garantir un dispositif électrique dit HFFR pour l'anglicisme « *Halogen-Free Flame Retardant »,* le dispositif électrique, ou en d'autres termes les éléments qui composent ledit dispositif électrique, ne comprend/comprennent de préférence pas de composés halogénés. Ces composés halogénés peuvent être de toutes natures, tels que par exemple des polymères fluorés ou des polymères chlorés comme le polychlorure de vinyle (PVC), des plastifiants halogénés, des charges minérales halogénées, ...etc.

### Additifs

La composition peut typiquement comprendre en outre des additifs en une quantité de 5 à 20 parties en poids pour 100 parties en poids de polymère dans la composition. Les additifs sont bien connus de l'homme du métier et peuvent être par exemple choisis parmi des agents de protection (e.g. des anti-UV, des anti-cuivre), des agents de mise en oeuvre (e.g. des plastifiants, des lubrifiants), et des pigments.

Comme mentionné précédemment, la composition polymère peut également comprendre un catalyseur de réticulation afin d'aider à la réticulation. Ce catalyseur de réticulation peut être plus particulièrement utilisé lorsque l'agent de réticulation non polymérique de l'invention comprend une fonction réactive du type anhydride.

Le catalyseur de réticulation peut être un catalyseur du type base de Lewis, ou en d'autre termes une entité chimique nucléophile dont un des constituants possède un doublet ou plus d'électrons libres ou non liants sur sa couche de valence.

A titre d'exemple, le catalyseur de réticulation peut être choisi parmi des imides, des amines tertiaires, des imidazoles, et un de leurs mélanges.

Les catalyseurs de réticulation de type phénolique seront préférés dans le cadre de l'invention, ce catalyseur étant notamment une base de Lewis telle que par exemple le 2,4,6-tris(diméthylaminoéthyle) phénol.

Lorsque la composition polymère comprend un catalyseur de réticulation, notamment en présence d'un agent de réticulation non polymérique comprenant une fonction réactive du type anhydride, la composition polymère peut comprendre de 0,01 à 2,0 parties en poids de catalyseur de réticulation pour 100 parties en poids de polymère, et de préférence de 0,05 à 1,0 parties en poids de catalyseur de réticulation pour 100 parties en poids de polymère.

### La couche réticulée et le dispositif électrique

Dans la présente invention, la couche réticulée peut être facilement caractérisée par la détermination de son taux de gel selon la norme ASTM D2765-01.

Plus particulièrement, ladite couche réticulée peut avoir avantageusement un taux de gel, selon la norme ASTM D2765-01, d'au moins 40%, de préférence d'au moins 50%, de préférence d'au moins 60%, et de façon particulièrement préférée d'au moins 70%.

Le dispositif électrique de l'invention peut être un câble électrique ou un accessoire pour câble électrique.

Selon un premier mode de réalisation, le dispositif selon l'invention est un câble électrique comprenant un élément électriquement conducteur allongé, entouré par ladite couche réticulée.

Selon un deuxième mode de réalisation, le dispositif selon l'invention est un accessoire pour câble électrique, ledit accessoire comprenant ladite couche réticulée. Ledit accessoire est plus particulièrement destiné à être associé à au moins un câble électrique, la couche réticulée étant destinée à entourer au moins une extrémité d'un câble électrique. L'accessoire peut être notamment une jonction ou une terminaison, pour câble électrique.

La couche réticulée de l'invention peut être une couche électriquement isolante ou une couche semi-conductrice.

Selon un premier mode de réalisation, la couche réticulée de l'invention peut être une couche électriquement isolante.

La couche réticulée de ce premier mode de réalisation présente en outre avantageusement une résistance au claquage électrique améliorée de façon significative.

Plus particulièrement, on entend par « couche électriquement isolante » une couche dont la conductivité électrique peut être d'au plus 1.10⁻⁹ S/m (siemens par mètre) (à 25°C).

Lorsque le dispositif électrique de l'invention est un câble électrique, au moins deux variantes de ce premier mode de réalisation sont possibles.

Selon une première variante du premier mode de réalisation, la couche réticulée de l'invention est directement en contact physique avec l'élément électriquement conducteur allongé. On parle dans ce cas notamment de câble basse tension.

La composition polymère utilisée pour former le câble basse tension comprend préférentiellement au moins une charge, telle que définie précédemment dans l'invention.

En outre, le polymère de l'invention peut comprendre avantageusement ladite fonction acrylate.

Selon une deuxième variante du premier mode de réalisation, le câble électrique de l'invention comprend en outre une première couche semi-conductrice et une deuxième couche semi-conductrice, la première couche semi-conductrice entourant l'élément électriquement conducteur allongé, la couche électriquement isolante entourant la première couche semi-conductrice, et la deuxième couche semi-conductrice entourant la couche électriquement isolante. On parle dans ce cas notamment de câble moyenne ou haute tension.

La composition polymère utilisée pour former le câble moyenne ou haute tension, et plus particulièrement la couche électriquement isolante dudit câble, ne comprend préférentiellement pas de charge, ou bien ne comprend pas de charge en quantité suffisante pour modifier les propriétés électriques de la couche électriquement isolante.

En outre, le polymère de l'invention peut avantageusement ne pas comprendre ladite fonction acrylate.

Selon un deuxième mode de réalisation, la couche réticulée de l'invention peut être une couche semi-conductrice. Cette couche semi-conductrice peut être au moins une des couches semi-conductrices d'un câble moyenne ou haute tension tel que défini ci-avant.

Par conséquent, la composition polymère de l'invention peut comprendre en outre une charge électriquement conductrice en une quantité suffisante pour rendre la composition polymère semi-conductrice. On peut citer par exemple comme charge électriquement conductrice du noir de carbone.

Plus particulièrement, on entend par « couche semi-conductrice » une couche dont la conductivité électrique peut être d'au moins 1.10⁻⁹ S/m (siemens par mètre), de préférence d'au moins 1.10⁻³ S/m, et de préférence peut être inférieure à 1.10³ S/m (à 25°C).

Lorsque le dispositif électrique de l'invention est un câble électrique, ce dernier peut comprendre une première couche semi-conductrice entourant l'élément électriquement conducteur allongé, une couche électriquement isolante entourant la première couche semi-conductrice, et une deuxième couche semi-conductrice entourant la couche électriquement isolante, la couche réticulée de l'invention étant au moins l'une de ces trois couches, de préférence au moins deux desdites trois couches, et de préférence lesdites trois couches. On parle dans ce cas notamment de câble moyenne ou haute tension.

Dans la présente invention, l'élément électriquement conducteur allongé du câble électrique peut être un fils métallique ou une pluralité de fils métalliques, torsadé(s) ou non, notamment en cuivre ou en aluminium, ou un de leurs alliages.

Lorsque le dispositif électrique de l'invention est un accessoire pour câble électrique, ledit accessoire entoure plus particulièrement au moins une extrémité d'un câble électrique, ladite extrémité étant celle qui est destinée à être associée audit accessoire.

L'accessoire peut être typiquement un corps longitudinal creux, tel que par exemple une jonction ou une terminaison pour câble électrique, dans lequel au moins une partie d'un câble électrique est destinée à être positionnée.

L'accessoire comporte au moins un élément semi-conducteur et au moins un élément électriquement isolant, ces éléments étant destinés à entourer une extrémité d'un câble électrique. L'élément semi-conducteur est bien connu pour contrôler la géométrie du champ électrique, lorsque le câble électrique, associé audit accessoire, est sous tension.

La couche réticulée de l'invention peut être ledit élément semi-conducteur et/ou ledit élément électriquement isolant.

Lorsque l'accessoire est une jonction, cette dernière permet de connecter ensemble deux câbles électriques, la jonction entourant alors en partie ces deux câbles électriques. Plus particulièrement, l'extrémité de chaque câble électrique destiné à être connecté est positionnée à l'intérieur de ladite jonction.

Lorsque le dispositif de l'invention est une terminaison pour câble électrique, cette dernière entoure en partie un câble électrique. Plus particulièrement, l'extrémité du câble électrique destiné à être connecté est positionnée à l'intérieur de ladite terminaison.

La couche réticulée de l'invention peut être une couche extrudée ou une couche moulée, par des procédés bien connus de l'homme du métier. Lorsque le dispositif électrique est un câble électrique, la couche réticulée est de préférence une couche extrudée. Lorsque le dispositif électrique est un accessoire pour câble électrique, la couche réticulée est de préférence une couche moulée.

Un autre objet de l'invention concerne un procédé de fabrication d'un dispositif électrique du type câble électrique selon l'invention, caractérisé en ce qu'il comprend les étapes suivantes :
i. extruder la composition polymère autour d'un élément électriquement conducteur allongé pour obtenir une couche extrudée, et
ii. réticuler la couche extrudée de l'étape i.

L'étape i peut être réalisée par des techniques bien connues de l'homme du métier en utilisant une extrudeuse.

Lors de l'étape i, la température au sein de l'extrudeuse ne doit pas dépasser préférentiellement la température d'ouverture de la fonction époxy du polymère, afin d'éviter toute réticulation au sein de l'extrudeuse. A titre d'exemple, la température de mise en oeuvre par extrusion de la composition polymère est inférieure à 200°C, et de préférence inférieure à 150°C.

En sortie d'extrudeuse, on obtient donc une couche extrudée autour dudit élément électriquement conducteur, pouvant être ou non directement en contact physique avec ledit élément électriquement conducteur.

En sortie d'extrudeuse, la couche extrudée est donc une couche dite « non réticulée ».

On entend par « non réticulée » une couche dont le taux de gel selon la norme ASTM D2765-01 est d'au plus 20%, de préférence d'au moins 10%, de préférence d'au moins 5%, et de façon particulièrement préférée de 0%.

Préalablement à l'étape i, les composés constitutifs de la composition polymère de l'invention peuvent être mélangés, notamment avec le polymère A à l'état fondu, afin d'obtenir un mélange homogène. La température au sein du mélangeur peut être suffisante pour obtenir un polymère A à l'état fondu, mais est limitée pour éviter l'ouverture de la fonction époxy du polymère, et donc la réticulation du polymère A.

Puis le mélange homogène est granulé, par des techniques bien connues de l'homme du métier. Ces granulés peuvent ensuite alimenter une extrudeuse pour réaliser l'étape i.

L'étape ii peut être réalisée par voie thermique, par exemple à l'aide d'un tube vapeur ou d'un bain de sel fondu, ces techniques étant bien connues de l'homme du métier. A titre d'exemple, la température de réticulation est inférieure à 300°C, et de préférence inférieure ou égale à 250°C.

En sortie d'extrudeuse, la composition extrudée sous forme de couche autour de l'élément électriquement conducteur peut ensuite être soumise à une température suffisante pour pouvoir ouvrir la fonction époxy du polymère A, et ainsi faire réagir l'agent de réticulation avec la fonction époxy ouverte. On obtient alors une couche extrudée et réticulée.

D'autres caractéristiques et avantages de la présente invention apparaîtront à la lumière de la description d'un exemple non limitatif d'un câble électrique selon l'invention fait en référence aux figures.

La figure 1 représente une vue schématique en coupe transversale d'un câble électrique selon un mode de réalisation préféré conforme à l'invention.

La figure 2 représente une vue schématique d'un dispositif électrique selon l'invention, comprenant une jonction en coupe longitudinale, cette jonction entourant l'extrémité de deux câbles électriques.

La figure 3 représente une vue schématique d'un dispositif électrique selon une première variante de l'invention, comprenant une terminaison en coupe longitudinale, cette terminaison entourant l'extrémité d'un unique câble électrique.

Les figures 4a à 4f présentent des spectres d'absorbance infra-rouge en fonction du temps (0h, 24h, 96h et 168h), pour des couches réticulées conformes à l'invention et non conformes à l'invention.

La figure 5 présente des histogrammes de résistance à la traction selon la norme NF EN 60811-1-1, à 0h, 24h, 96h et 168h, pour des couches réticulées conformes à l'invention et non conformes à l'invention.

La figure 6 présente des histogrammes d'allongement à la rupture selon la norme NF EN 60811-1-1, à 0h, 24h, 96h et 168h, pour des couches réticulées conformes à l'invention et non conformes à l'invention.

Pour des raisons de clarté, seuls les éléments essentiels pour la compréhension de l'invention ont été représentés de manière schématique, et ceci sans respect de l'échelle.

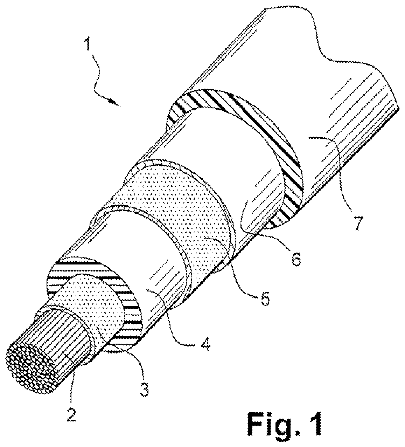

Le câble d'énergie 1 à moyenne ou haute tension, illustré dans la figure 1, comprend un élément conducteur 2 central allongé, notamment en cuivre ou en aluminium. Le câble d'énergie 1 comprend en outre plusieurs couches disposées successivement et coaxialement autour de cet élément conducteur 2, à savoir : une première couche 3 semi-conductrice dite « couche semi-conductrice interne », une couche 4 électriquement isolante, une deuxième couche 5 semi-conductrice dite « couche semi-conductrice externe », un écran métallique 6 de mise à la terre et/ou de protection, et une gaine extérieure de protection 7.

La couche 4 électriquement isolante est une couche extrudée et réticulée, obtenue à partir de la composition polymère selon l'invention.

Les couches semi-conductrices sont également des couches extrudées et réticulées, pouvant être obtenues à partir de la composition polymère selon l'invention.

La présence de l'écran métallique 6 et de la gaine extérieure de protection 7 est préférentielle, mais non essentielle, cette structure de câble étant en tant que telle bien connue de l'homme du métier.

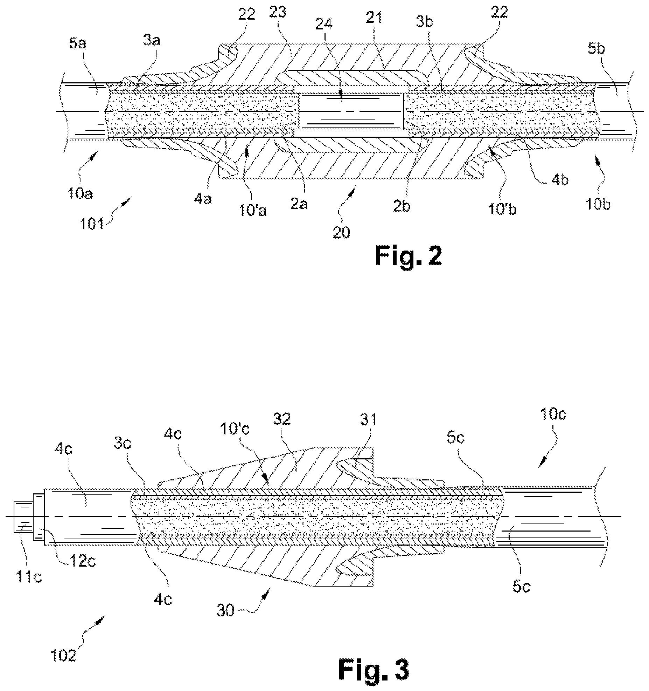

La figure 2 représente un dispositif 101 comprenant une jonction 20 entourant en partie deux câbles électriques 10a et 10b.

Plus particulièrement, les câbles électriques 10a et 10b comprennent respectivement une extrémité 10'a et 10'b, destinées à être entourées par la jonction 20.

Le corps de la jonction 20 comporte un premier élément semi-conducteur 21 et un second élément semi-conducteur 22, séparés par un élément électriquement isolant 23, lesdits éléments semi-conducteur 21, 22 et ledit élément électriquement isolant 23 entourent les extrémités 10'a et 10'b respectivement des câbles électriques 10a et 10b.

Cette jonction 20 permet de connecter électriquement le premier câble 10a au second câble 10b, notamment grâce à un connecteur électrique 24 disposé au centre de la jonction 20.

Au moins un des éléments choisis parmi le premier élément semi-conducteur 21, le second élément semi-conducteur 22 et ledit élément électriquement isolant 23, peut être une couche réticulée telle que décrite dans l'invention.

Le premier câble électrique 10a comprend un conducteur électrique 2a entouré par une première couche semi-conductrice 3a, une couche électriquement isolante 4a entourant la première couche semi-conductrice 3a, et une seconde couche semi-conductrice 5a entourant la couche électriquement isolante 4a.

Le second câble électrique 10b comprend un conducteur électrique 2b entouré par au moins une première couche semi-conductrice 3b, une couche électriquement isolante 4b entourant la première couche semi-conductrice 3b, et une seconde couche semi-conductrice 5b entourant la couche électriquement isolante 4b.

Ces câbles électriques 10a et 10b peuvent être ceux décrits dans la présente invention.

A ladite extrémité 10'a, 10'b de chaque câble électrique 10a, 10b, la seconde couche semi-conductrice 5a, 5b est au moins partiellement dénudée afin que la couche électriquement isolante 4a, 4b soit au moins partiellement positionnée à l'intérieur de la jonction 20, sans être recouverte de la seconde couche semi-conductrice 5a, 5b du câble.

A l'intérieur de la jonction 20, les couches électriquement isolantes 4a, 4b sont directement en contact physique avec l'élément électriquement isolant 23 et le premier élément semi-conducteur 21 de la jonction 20. Les deuxièmes couches semi-conductrices 5a, 5b sont directement en contact physique avec le second élément semi-conducteur 22 de la jonction 20.

La figure 3 représente un dispositif 102 comprenant une terminaison 30 entourant un unique câble électrique 10c.

Plus particulièrement, le câble électrique 10c comprend une extrémité 10'c, destinée à être entourée par la terminaison 30.

Le corps de la terminaison 30 comporte un élément semi-conducteur 31 et un élément électriquement isolant 32, ledit élément semi-conducteur 31 et ledit élément électriquement isolant 32 entourent l'extrémité 10'c du câble électrique 10c.

Au moins un des éléments choisi parmi l'élément semi-conducteur 31 et l'élément électriquement isolant 32 peut être une couche réticulée telle que décrite dans l'invention.

Le câble électrique 10c comprend un conducteur électrique 2c entouré par une première couche semi-conductrice 3c, une couche électriquement isolante 4c entourant la première couche semi-conductrice 3c, et une seconde couche semi-conductrice 5c entourant la couche électriquement isolante 4c.

Ce câble électrique 10c peut être celui décrit dans la présente invention.

A ladite extrémité 10'c du câble électrique 10c, la seconde couche semi-conductrice 5c est au moins partiellement dénudée afin que la couche électriquement isolante 4c soit au moins partiellement positionnée à l'intérieur de la terminaison 30, sans être recouverte de la seconde couche semi-conductrice 5c du câble.

A l'intérieur de la terminaison 30, la couche électriquement isolante 4c, est directement en contact physique avec l'élément électriquement isolant 32 de la terminaison 30. La deuxième couche semi-conductrice 5c est directement en contact physique avec l'élément semi-conducteur 31 de la jonction 30.

### Exemples

### 1. Compositions électriquement isolantes non chargées

Le tableau 1 ci-dessous rassemble des compositions réticulables non chargées dont les quantités des composés sont exprimées en parties en poids pour 100 parties en poids de polymère, le polymère étant ici uniquement le Polymère/Epoxy. Les compositions I1 à I6 sont conformes à l'invention, tandis que les compositions C1 et C2 correspondent à des compositions comparatives.

**Tableau 1a**

| Com positions | I1 | I2 | I3 | I4 | I5 | C1 |
|---|---|---|---|---|---|---|
| Polymère/Epoxy | 100 | 100 | 100 | 100 | 100 | 100 |
| Agent de réticulation | 0,75 | 0,75 | 0,75 | 0,75 | 0,75 | 0,75 |
| Irgastab KV10 | 1,0 | 0 | 0 | 0 | 0 | 0 |
| Irganox 1010 | 0 | 0,5 | 0 | 0 | 0 | 0 |
| Irganox 1076 | 0 | 0 | 0,9 | 0 | 0 | 0 |
| Irganox 1330 | 0 | 0 | 0 | 0,44 | 0 | 0 |
| Irganox 1035 | 0 | 0 | 0 | 0 | 0,45 | 0 |
| Irganox PS802 | 0 | 0 | 0 | 0 | 0 | 0,58 |

**Tableau 1b**

| Com positions | I6 | C2 |
|---|---|---|
| Polymère/Epoxy | 100 | 100 |
| Agent de réticulation | 0,75 | 0,75 |
| Amine aromatique | 0,3 | 0 |
| Amine non aromatique | 0 | 0,15 |

L'origine des composés des tableaux 1a et 1b est la suivante :
- Polymère/Epoxy est un copolymère d'éthylène et de méthacrylate de glycidyle (GMA), commercialisé par la société Arkema sous la référence Lotader AX8840, ce copolymère comprenant 8% en poids de GMA ;
- Agent de réticulation est l'acide amino 11 undécanoïque, commercialisé par la société SIGMA-ALDRICH sous la référence acide amino 11 undécanoïque ;
- Irgastab KV10 est un antioxydant, commercialisé par la société BASF sous la référence Irgastab KV10 (CAS No. 110553-27-0) ;
- Irganox 1010 est un antioxydant, commercialisé par la société BASF sous la référence Irganox 1010 (CAS No. 6683-19-8) ;
- Irganox 1076 est un antioxydant, commercialisé par la société BASF sous la référence Irganox 1076 (CAS No. 2082-79-3) ;
- Irganox 1330 est un antioxydant, commercialisé par la société BASF sous la référence Irganox 1330 (CAS No. 1709-70-2) ;
- Irganox 1035 est un antioxydant, commercialisé par la société BASF sous la référence Irganox 1035 (CAS No. 41484-35-9) ;
- Irganox PS802 est un antioxydant, commercialisé par la société BASF sous la référence Irganox PS802 (CAS No. 693-36-7) ;
- Amine aromatique est l'antioxydant 1,2-dihydro-2,2,4-trimethylquinoline, commercialisé par la société FLEXSYS sous la référence Flectol TMQ (CAS No. 26780-96-1) ; et
- Amine non aromatique est l'antioxydant N,N'-diethylhydroxylamine (amine tertiaire), commercialisé par la société SIGMA ALDRICH sous la référence diethylhydroxylamine (CAS No. 3710-84-7).

Les compositions rassemblées dans les tableaux 1a et 1b sont mises en oeuvre comme suit.

Dans un premier temps, pour chaque composition (I1 à I6, C1 et C2), on mélange l'agent de réticulation et l'antioxydant avec le polymère à l'état fondu, dans un mélangeur interne de type bi-vis ou Buss, la température au sein du mélangeur ne dépassant pas 130°C afin d'éviter l'ouverture de la fonction époxy du polymère, et d'éviter ainsi la réticulation du polymère. Le mélange homogène ainsi obtenu est ensuite granulé.

Dans un second temps, les granulés sont ensuite introduits dans une extrudeuse monovis, et extrudés à une température maximale de 130°C, afin d'éviter toute réticulation du polymère dans l'extrudeuse.

L'extrusion se fait autour d'un fil conducteur de cuivre de section 1,5 mm². On obtient un câble électrique comprenant une couche extrudée et non réticulée en contact direct avec le fil conducteur.

Dans un troisième temps, la couche extrudée est réticulée par apport de chaleur, à une température de 200°C, en passant ledit câble électrique à l'intérieur d'un tube vapeur sous une pression de vapeur de 15 bar.

### 2. Compositions semi-conductrices

Le tableau 2 ci-dessous rassemble une composition I7 réticulable semi-conductrice, conforme à l'invention, dont les quantités des composés sont exprimées en parties en poids pour 100 parties en poids de polymère, le polymère étant ici uniquement le Polymère/Epoxy.

**Tableau 2**

| Com position | I7 |
|---|---|
| Polymère/Epoxy | 100 |
| Acide aminé | 0,38 |
| Antioxydants | 1,5 |
| Noir de carbone | 42,9 |

L'origine des composés du tableau 2 est la suivante :
- Polymère/Epoxy est un copolymère d'éthylène et de méthacrylate de glycidyle (GMA), commercialisé par la société Arkema sous la référence Lotader AX8840, ce copolymère comprenant 8% en poids de GMA ;
- Acide aminé est un acide amino 11 undécanoïque, commercialisé par la société SI GMA-ALDRICH sous la référence acide amino 11 undécanoïque ;
- Antioxydants est un mélange de 0,5 parties en poids d'Irganox PS802 et de 1,0 partie en poids d'Irganox 1035, ces antioxydants étant commercialisé par la société BASF ; et
- Noir de carbone est du noir de carbone commercialisé par la société Cabot sous la référence Carbon black VXC500.

La composition I7 du tableau 2 est mise en oeuvre selon le même mode opératoire que celui décrit pour les compositions des tableaux 1a et 1b, excepté le fait que le noir de carbone est tout d'abord mélangé avec le polymère fondu, puis on incorpore l'agent de réticulation et les antioxydants audit mélange. L'ajout de l'agent de réticulation dans une étape distincte et postérieure à l'ajout du noir de carbone permet d'éviter toute réticulation prématurée de la composition polymère pouvant subvenir suite à l'élévation de température induite par l'ajout du noir de carbone. L'agent de réticulation est ainsi ajouté au mélange chargé une fois le mélange refroidi à une température inférieure à 130°C.

### 3. Caractérisation des compositions réticulées

### 3.1. Spectres d'absorbance infra-rouge

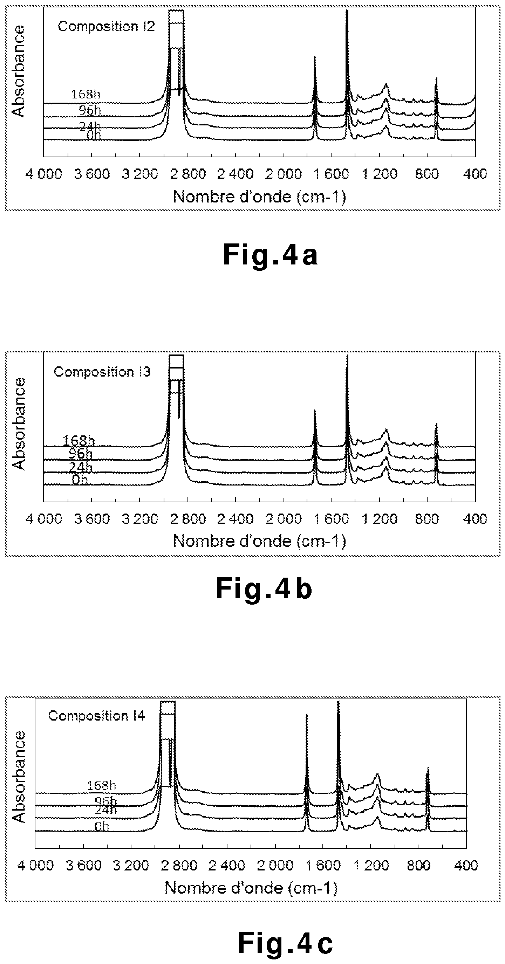

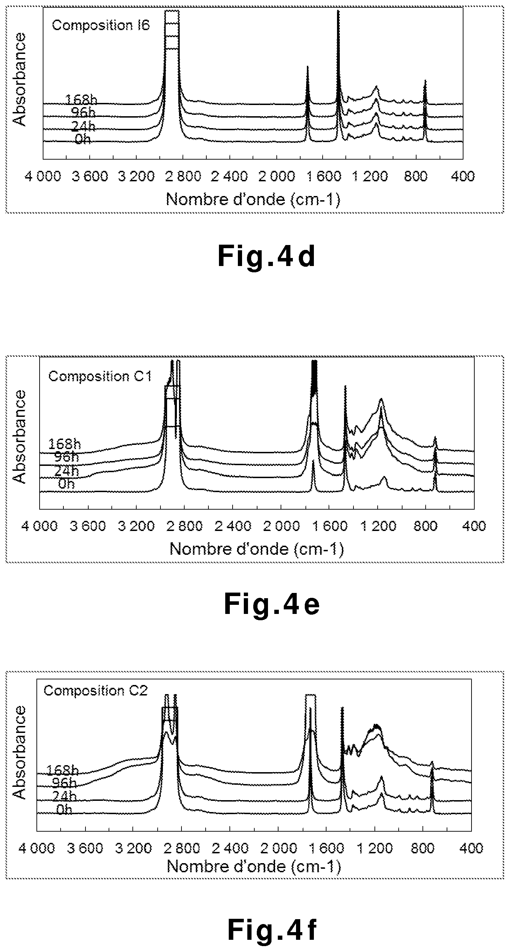

Les figures 4a à 4d présentent des spectres d'absorbance infra-rouge en fonction du temps (0h, 24h, 96h et 168h), pour des couches réticulées conformes à l'invention (Compositions I2, I3, I4 et I6).

Pour les compositions selon l'invention, ces spectres d'absorbances montrent qu'au cours du vieillissement, jusqu'à 168h, le composé C de l'invention joue parfaitement son rôle, à savoir il empêche les réactions d'éthérification puisque les pics autour de 1200 cm⁻¹ restent stables, et sont caractéristiques de la stabilité du nombre de fonctions éther formées. En outre, le pic autour de 915 cm⁻¹ correspondant à la fonction époxy reste aussi constant.

Les figures 4e à 4f présentent des spectres d'absorbance infra-rouge en fonction du temps (0h, 24h, 96h et 168h), pour des couches réticulées non conformes à l'invention (Compositions C1 et C2).

Ces spectres d'absorbances montrent qu'au cours du vieillissement, et à partir de 24h pour la composition C1, et de 96h pour la composition C2, l'antioxydant utilisé ne parvient pas à empêcher les réactions d'éthérification puisque les pics autour de 1200 cm⁻¹ varient, cette variation étant caractéristique de l'éthérification des groupements époxy du polymère A.

### 3.2. Test de résistance à la traction

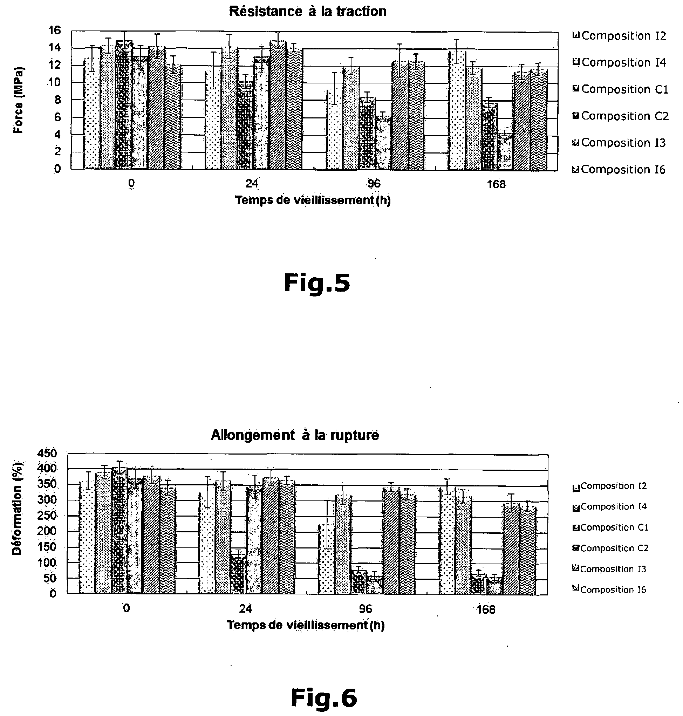

La figure 5 présente des histogrammes de résistance à la traction selon la norme NF EN 60811-1-1, à 0h, 24h, 96h et 168h, pour des couches réticulées conformes à l'invention (Compositions I2, I3, I4 et I6), et non conformes à l'invention (Compositions C1 et C2).

Il apparaît clairement qu'après un vieillissement de 168h, les compositions selon l'invention présentent une force de résistance à la traction (i.e. force maximale de résistance atteinte avant rupture) d'au moins 10 MPa, contrairement aux compositions C1 et C2 qui présentent une force d'au plus 8 MPa.

### 3.3. Test d'allongement à la rupture

La figure 6 présente des histogrammes d'allongement à la rupture selon la norme NF EN 60811-1-1, à 0h, 24h, 96h et 168h, pour des couches réticulées conformes à l'invention (Compositions I2, I3, I4 et I6), et non conformes à l'invention (Compositions C1 et C2).

Il apparaît clairement qu'après un vieillissement de 168h, les compositions selon l'invention présentent une déformation à l'allongement (i.e. allongement maximum atteint avant rupture) d'au moins 280 %, contrairement aux compositions C1 et C2 qui présentent une déformation d'au plus 70 %.

## Revendications

1. Dispositif électrique (1,20,30) comprenant une couche réticulée (3, 4, 5, 21, 22, 23, 31, 32) obtenue à partir d'une composition polymère comprenant :
- au moins un polymère A comprenant au moins une fonction époxy, et
- un agent de réticulation B comprenant au moins une fonction réactive apte à réagir avec la fonction époxy dudit polymère A pour permettre la réticulation dudit polymère A, ladite fonction réactive de l'agent de réticulation B étant choisie parmi une fonction anhydride, une fonction carboxyle et une fonction amine,
**caractérisé en ce que** la composition polymère comprend en outre un composé C différent du polymère A et de l'agent de réticulation B, ledit composé C comprenant :
- au moins un groupement aromatique, et
- un groupement réactif apte à interagir physiquement avec la fonction hydroxyle formée par l'ouverture de ladite fonction époxy lors de la réticulation du polymère A, le groupement réactif du composé C étant sous la forme d'un groupement hydroxyle (OH) et/ou d'un groupement amine (NH).

2. Dispositif selon la revendication 1, **caractérisé en ce que** le composé C est un antioxydant.

3. Dispositif selon la revendication 1 ou 2, **caractérisé en ce que** le groupement aromatique du composé C est un groupement benzénique ou un de ses dérivés.

4. Dispositif selon l'une quelconque des revendications précédentes, **caractérisé en ce que** le groupement aromatique ensemble avec le groupement réactif forment un groupement phénolique.

5. Dispositif selon la revendication 4, **caractérisé en ce que** le groupement phénolique est di-substitué en position ortho.

6. Dispositif selon la revendication 4 ou 5, **caractérisé en ce que** le groupement phénolique est un groupement di-tertbutyl-4-hydroxyphenyl.

7. Dispositif selon l'une quelconque des revendications 1 à 3, **caractérisé en ce que** le groupement aromatique ensemble avec le groupement réactif forment un groupement aminobenzénique dont l'amine est du type primaire ou secondaire.

8. Dispositif selon l'une quelconque des revendications précédentes, **caractérisé en ce que** la composition polymère comprend au plus 10 parties en poids de composé C pour 100 parties en poids de polymère(s) dans la composition.

9. Dispositif selon l'une quelconque des revendications précédentes, **caractérisé en ce que** le polymère A comprend au moins un composé choisi parmi les esters de glycidyle.

10. Dispositif selon l'une quelconque des revendications précédentes, **caractérisé en ce que** le polymère A comprend au plus 10% en poids de fonction époxy.

11. Dispositif selon l'une quelconque des revendications précédentes, **caractérisé en ce que** le polymère A comprend au moins 0,1% en poids de fonction époxy.

12. Dispositif selon l'une quelconque des revendications précédentes, **caractérisé en ce que** la fonction époxy du polymère A est greffée sur ledit polymère.

13. Dispositif selon l'une quelconque des revendications précédentes, **caractérisé en ce que** le polymère A est un copolymère obtenu à partir d'au moins deux monomères, l'un des monomères comprenant ladite fonction époxy.

14. Dispositif selon l'une quelconque des revendications précédentes, **caractérisé en ce que** le polymère A comprend en outre au moins une fonction acrylate.

15. Dispositif selon l'une quelconque des revendications précédentes, **caractérisé en ce que** l'agent de réticulation B est un composé polymérique ou un composé non polymérique.

16. Dispositif selon l'une quelconque des revendications précédentes, **caractérisé en ce que** la fonction amine de l'agent de réticulation est une amine primaire ou une amine secondaire.

17. Dispositif selon l'une quelconque des revendications précédentes, **caractérisé en ce que** l'agent de réticulation B comprend au moins deux fonctions réactives.

18. Dispositif selon les revendications 1 à 15 et 17, **caractérisé en ce que** l'agent de réticulation comprend une fonction amine et une fonction carboxyle.

19. Dispositif selon les revendications 1 à 15 et 17, **caractérisé en ce que** l'agent de réticulation comprend deux fonctions amine.

20. Dispositif selon l'une quelconque des revendications précédentes, **caractérisé en ce qu'**il est un câble électrique (1) comprenant un élément électriquement conducteur allongé (2), entouré par ladite couche réticulée (3, 4, 5).

21. Dispositif selon l'une quelconque des revendications 1 à 19, **caractérisé en ce qu'**il est un accessoire (20, 30) pour câble électrique, ledit accessoire comprenant ladite couche réticulée (21, 22, 23, 31, 32).

22. Dispositif selon la revendication 21, **caractérisé en ce que** l'accessoire est une jonction (20) ou une terminaison (30), pour câble électrique.

23. Dispositif selon l'une quelconque des revendications précédentes, **caractérisé en ce que** la couche réticulée est une couche électriquement isolante (4, 23, 32).

24. Dispositif selon l'une quelconque des revendications 1 à 22, **caractérisé en ce que** la couche réticulée est une couche semi-conductrice (3, 5, 21, 22, 31).

25. Dispositif selon l'une quelconque des revendications précédentes, **caractérisé en ce qu'**il comprend une première couche semi-conductrice (3) entourant l'élément électriquement conducteur allongé (2), une couche électriquement isolante (4) entourant la première couche semi-conductrice (3), et une deuxième couche semi-conductrice (5) entourant la couche électriquement isolante (4), la couche réticulée étant au moins l'une de ces trois couches.

## Patentansprüche

1. Elektrische Vorrichtung (1, 20, 30), umfassend eine vernetzte Schicht (3, 4, 5, 21, 22, 23, 31, 32), die aus einer Polymerzusammensetzung erlangt wird, umfassend:
- mindestens ein Polymer A, umfassend mindestens eine Epoxyfunktion, und
- ein Vernetzungsmittel B, umfassend mindestens eine reaktive Funktion, die geeignet ist, um mit der Epoxyfunktion des Polymers A zu reagieren, um die Vernetzung des Polymers A zu ermöglichen, wobei die reaktive Funktion des Vernetzungsmittels B ausgewählt ist aus einer Anhydridfunktion, einer Carboxylfunktion und einer Aminfunktion, **dadurch gekennzeichnet, dass** die Polymerzusammensetzung ferner eine Verbindung C umfasst, die sich von dem Polymer A und dem Vernetzungsmittel B unterscheidet, die Verbindung C umfassend:
- mindestens eine aromatische Gruppierung, und
- eine reaktive Gruppierung, die geeignet ist, um physikalisch mit der Hydroxylfunktion zu interagieren, die durch die Öffnung der genannten Epoxyfunktion bei der Vernetzung des Polymers A gebildet wird, wobei die reaktive Gruppierung der Verbindung C in Form einer Hydroxylgruppe (OH) und/oder einer Aminogruppe (NH) ist.

2. Vorrichtung nach Anspruch 1, **dadurch gekennzeichnet, dass** die Verbindung C ein Antioxidans ist.

3. Vorrichtung nach Anspruch 1 oder 2, **dadurch gekennzeichnet, dass** die aromatische Gruppierung der Verbindung C eine Benzolgruppierung oder ein Derivat davon ist.

4. Vorrichtung nach einem der vorherigen Ansprüche, **dadurch gekennzeichnet, dass** die aromatische Gruppierung zusammen mit der reaktiven Gruppierung eine Phenolgruppierung bildet.

5. Vorrichtung nach Anspruch 4, **dadurch gekennzeichnet, dass** die Phenolgruppierung an ortho-Position di-substituiert ist.

6. Vorrichtung nach Anspruch 4 oder 5, **dadurch gekennzeichnet, dass** die Phenolgruppierung eine di-Tertbutyl-4-hydroxyphenyl-Gruppierung ist.

7. Vorrichtung nach einem der Ansprüche 1 bis 3, **dadurch gekennzeichnet, dass** die aromatische Gruppierung zusammen mit der reaktiven Gruppierung eine Aminobenzolgruppierung bildet, deren Amin vom primären oder sekundären Typ ist.

8. Vorrichtung nach einem der vorherigen Ansprüche, **dadurch gekennzeichnet, dass** die Polymerzusammensetzung höchstens 10 Gewichtsteile von Verbindung C pro 100 Gewichtsteile Polymer(e) in der Zusammensetzung umfasst.

9. Vorrichtung nach einem der vorherigen Ansprüche, **dadurch gekennzeichnet, dass** das Polymer A mindestens eine Verbindung umfasst, die ausgewählt ist aus Glycidylestern.

10. Vorrichtung nach einem der vorherigen Ansprüche, **dadurch gekennzeichnet, dass** das Polymer A höchstens 10 Gewichts-% Epoxyfunktion umfasst.

11. Vorrichtung nach einem der vorherigen Ansprüche, **dadurch gekennzeichnet, dass** das Polymer A mindestens 0,1 Gewichts-% Epoxyfunktionalität umfasst.

12. Vorrichtung nach einem der vorherigen Ansprüche, **dadurch gekennzeichnet, dass** die Epoxyfunktion des Polymers A auf das Polymer aufgepfropft ist.

13. Vorrichtung nach einem der vorherigen Ansprüche, **dadurch gekennzeichnet, dass** das Polymer A ein Copolymer ist, das aus mindestens zwei Monomeren erlangt wird, wobei eines der Monomere die Epoxyfunktion umfasst.

14. Vorrichtung nach einem der vorherigen Ansprüche, **dadurch gekennzeichnet, dass** das Polymer A ferner mindestens eine Acrylatfunktion umfasst.

15. Vorrichtung nach einem der vorherigen Ansprüche, **dadurch gekennzeichnet, dass** das Vernetzungsmittel B eine polymere Verbindung oder eine nicht-polymere Verbindung ist.

16. Vorrichtung nach einem der vorherigen Ansprüche, **dadurch gekennzeichnet, dass** die Aminfunktion des Vernetzungsmittels ein primäres Amin oder ein sekundäres Amin ist.

17. Vorrichtung nach einem der vorherigen Ansprüche, **dadurch gekennzeichnet, dass** das Vernetzungsmittel B mindestens zwei reaktive Funktionen umfasst.

18. Vorrichtung nach den Ansprüchen 1 bis 15 und 17, **dadurch gekennzeichnet, dass** das Vernetzungsmittel eine Aminfunktion und eine Carboxylfunktion umfasst.

19. Vorrichtung nach den Ansprüchen 1 bis 15 und 17, **dadurch gekennzeichnet, dass** das Vernetzungsmittel zwei Aminfunktionen umfasst.

20. Vorrichtung nach einem der vorherigen Ansprüche, **dadurch gekennzeichnet, dass** sie ein elektrisches Kabel (1) ist, umfassend ein längliches, elektrisch leitendes Element (2), das von der vernetzten Schicht (3, 4, 5) umgeben ist.

21. Vorrichtung nach einem der Ansprüche 1 bis 19, **dadurch gekennzeichnet, dass** sie ein Zubehör (20, 30) für elektrisches Kabel ist, das Zubehör umfassend die vernetzte Schicht (21, 22, 23, 31, 32).

22. Vorrichtung nach Anspruch 21, **dadurch gekennzeichnet, dass** das Zubehör ein Anschluss (20) oder ein Abschluss (30) für ein elektrisches Kabel ist.

23. Vorrichtung nach einem der vorherigen Ansprüche, **dadurch gekennzeichnet, dass** die vernetzte Schicht eine elektrisch isolierende Schicht (4, 23, 32) ist.

24. Vorrichtung nach einem der Ansprüche 1 bis 22, **dadurch gekennzeichnet, dass** die vernetzte Schicht eine halbleitende Schicht (3, 5, 21, 22, 31) ist.

25. Vorrichtung nach einem der vorherigen Ansprüche, **dadurch gekennzeichnet, dass** sie eine erste halbleitende Schicht (3), die das längliche elektrisch leitende Element (2) umgibt, eine elektrisch isolierende Schicht (4), die die erste halbleitende Schicht (3) umgibt, und eine zweite halbleitende Schicht (5), die die elektrisch isolierende Schicht (4) umgibt, umfasst, wobei die vernetzte Schicht mindestens eine dieser drei Schichten ist.

## Claims

1. Electrical device (1, 20, 30) comprising a crosslinked layer (3, 4, 5, 21, 22, 23, 31, 32) obtained from a polymer composition comprising:
- at least one polymer A comprising at least one epoxy function, and
- a crosslinking agent B comprising at least one reactive function able to react with the epoxy function of said polymer A to allow crosslinking of said polymer A, said reactive function of the crosslinking agent B being chosen from among an anhydride function, a carboxyl function, and an amine function,
**characterized in that** the polymer composition further comprises a compound C differing from polymer A and from the crosslinking agent B, said compound C comprising:
- at least one aromatic group, and
- a reactive group capable physically of interacting with the hydroxyl function formed by the opening of said epoxy function when crosslinking polymer A, the reactive group of compound C being in the form of a hydroxyl group (OH) and/or an amine group (NH).

2. The device according to claim 1, **characterized in that** compound C is an antioxidant.

3. The device according to claim 1 or 2, **characterized in that** the aromatic group of compound C is a benzene group or a derivative thereof.

4. The device according to any of the preceding claims, **characterized in that** the aromatic group together with the reactive group form a phenolic group.

5. The device according to claim 4, **characterized in that** the phenolic group is disubstituted at ortho position.

6. The device according to claim 4 or 5, **characterized in that** the phenolic group is a di-tertbutyl-4-hydroxphenyl group.

7. The device according to any of claims 1 to 3, **characterized in that** the aromatic group together with the reactive group form an aminobenzene group having an amine of primary or secondary type.

8. The device according to any of the preceding claims, **characterized in that** the polymer composition comprises at most 10 parts by weight of compound C per 100 parts by weight of polymer(s) in the composition.

9. The device according to any of the preceding claims, **characterized in that** polymer A comprises at least one compound chosen from among glycidyl esters.

10. The device according to any of the preceding claims, **characterized in that** polymer A comprises at most 10 % by weight of epoxy function.

11. The device according to any of the preceding claims, **characterized in that** polymer A comprises at least 0.1 % by weight of epoxy function.

12. The device according to any of the preceding claims, **characterized in that** the epoxy function of polymer A is grafted onto said polymer.

13. The device according to any of the preceding claims, **characterized in that** polymer A is a copolymer obtained from at least two monomers, one of the monomers comprising said epoxy function.

14. The device according to any of the preceding claims, **characterized in that** polymer A further comprises at least one acrylate function.

15. The device according to any of the preceding claims, **characterized in that** the crosslinking agent B is a polymeric compound or non-polymeric compound.

16. The device according to any of the preceding claims, **characterized in that** the amine function of the crosslinking agent is a primary amine or a secondary amine.

17. The device according to any of the preceding claims, **characterized in that** the crosslinking agent B comprises at least two reactive functions.

18. The device according to claims 1 to 15 and 17, **characterized in that** the crosslinking agent comprises an amine function and a carboxyl function.

19. The device according to claims 1 to 15 and 17, **characterized in that** the crosslinking agent comprises two amine functions.

20. The device according to any of the preceding claims, **characterized in that** it is an electrical cable (1) comprising an elongate electrically conductive element (2) surrounded by said crosslinked layer (3, 4, 5).

21. The device according to any of claims 1 to 19, **characterized in that** it is an accessory (20, 30) for electrical cable, said accessory comprising said crosslinked layer (21, 22, 23, 31, 32).

22. The device according to claim 21, **characterized in that** the accessory is a joint (20) or termination (30) for electrical cable.

23. The device according to any of the preceding claims, **characterized in that** the crosslinked layer is an electrically insulating layer (4, 23, 32).

24. The device according to any of claims 1 to 22, **characterized in that** the crosslinked layer is a semiconductor layer (3, 5, 21, 22, 31).

25. The device according to any of the preceding claims, **characterized in that** it comprises a first semiconductor layer (3) surrounding the elongate electrically conductive element (2), an electrically insulating layer (4) surrounding the first semiconductor layer (3), and a second semiconductor layer (5) surrounding the electrically insulating layer (4), the crosslinked layer being at least one of these three layers.
